(19) Europäisches Patentamt
European Patent Office
Office européen des brevets

(11) EP 4 811 169 A1

(12) EUROPEAN PATENT APPLICATION

(43) Date of publication:
**23.09.2026 Bulletin 2026/39**

(21) Application number: **26163266.5**

(22) Date of filing: **09.03.2026**

(51) International Patent Classification (IPC):
***G06F 16/34*** ***(2025.01)***

(52) Cooperative Patent Classification (CPC):
**G06F 16/345**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **19.03.2025 JP 2025044276**

(71) Applicant: **FUJITSU LIMITED**
**Kawasaki-shi, Kanagawa 211-8588 (JP)**

(72) Inventors:
- **OOI, Chunwei**
  **Kawasaki-shi, Kanagawa, 211-8588 (JP)**
- **TAKEBE, Hiroaki**
  **Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

# (54) EXPLANATORY MATERIAL GENERATING METHOD AND EXPLANATORY MATERIAL GENERATING PROGRAM

(57) An explanatory material generating method executed by a computer, includes: receiving personal information representing an attribute of a user; specifying for each of a plurality of factors included in a first causal graph, a weight corresponding to the attribute represented by the received personal information; and generating explanatory material of a causal relationship expressed in the first causal graph, based on the first causal graph and the specified weight of each factor, using a machine learning model configured to generate information for explaining a causal relationship expressed in an input causal graph.

FIG.1

130
102
PERSONAL INFORMATION
INFORMATION PROCESSING DEVICE
101
120
121
122
123
124
125
126
127
128
129
0.1
1.0
110
MACHINE LEARNING MODEL
140
EXPLANATORY MATERIAL



Processed by Luminess, 75001 PARIS (FR)

## Description

### FIELD

The embodiments discussed herein are related to an explanatory material generating method and an explanatory material generating program.

### BACKGROUND

As a related art, there is a technique of generating a sentence for explaining a flow of causal effect from a causal graph using artificial intelligence (AI). The prediction result (explanatory text) of the generative AI is used, for example, to support a user in decision making related to supply chain management.

As a related art, there is a technique in which a start-point phrase corresponding to an obtained query is determined from multiple phrases included in causal relationship data, a search for a phrase is performed by tracing a causal relationship included in the causal relationship data from the start-point phrase in a search procedure according to an inference type determined based on the query, and a phrase obtained by the search is output as an answer to the query. For example, refer to International Publication No. WO 2024/189722.

### SUMMARY

It is an object in one aspect of the embodiments to at least solve the above problems in the conventional technologies.

According to an aspect of an embodiment, an explanatory material generating method executed by a computer, includes: receiving personal information representing an attribute of a user; specifying for each of a plurality of factors included in a first causal graph, a weight corresponding to the attribute represented by the received personal information; and generating explanatory material of a causal relationship expressed in the first causal graph, based on the first causal graph and the specified weight of each factor, using a machine learning model configured to generate information for explaining a causal relationship expressed in an input causal graph.

### BRIEF DESCRIPTION OF DRAWINGS

Fig. 1 is an explanatory diagram depicting an example of an explanatory material generating method according to an embodiment.
Fig. 2 is an explanatory diagram depicting an example of a system configuration of an information processing system 200.
Fig. 3 is a block diagram depicting an example of a hardware configuration of an explanatory material generating device 201.
Fig. 4 is a block diagram depicting an example of a functional configuration of the explanatory material generating device 201.
Fig. 5 is an explanatory diagram depicting an example of specifying a weight.
Fig. 6 is an explanatory diagram (part 1) depicting an example of a determination rule.
Fig. 7 is an explanatory diagram (part 2) depicting an example of a determination rule.
Fig. 8 is an explanatory diagram (part 3) depicting an example of a determination rule.
Fig. 9 is an explanatory diagram (part 4) depicting an example of a determination rule.
Fig. 10 is an explanatory diagram depicting a specific example of a path passing through a non-extracted factor.
Fig. 11 is an explanatory diagram depicting an example of specifying a label.
Fig. 12 is an explanatory diagram depicting a first operation example of the explanatory material generating device 201.
Fig. 13 is an explanatory diagram depicting a second operation example of the explanatory material generating device 201.
Fig. 14 is an explanatory diagram depicting a specific example of explanatory material.
Fig. 15 is a flowchart depicting a procedure of an example of the explanatory material generating process of the explanatory material generating device 201.

DESCRIPTION OF EMBODIMENTS

First, problems associated with the conventional techniques are discussed. In the conventional techniques, it is difficult to generate explanatory material relevant to the user from the causal graph.

Embodiments of an explanatory material generating method and an explanatory material generating program according to the present invention will be explained in detail below with reference to the accompanying drawings.

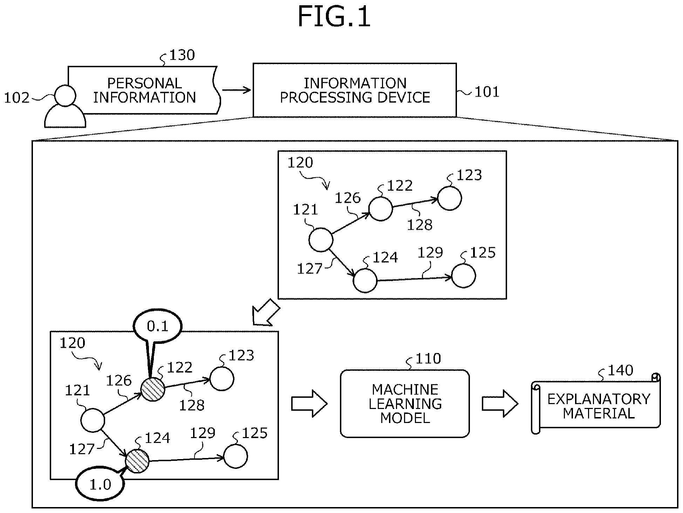

Fig. 1 is an explanatory diagram depicting an example of an explanatory material generating method according to an embodiment. In Fig. 1, an information processing device 101 is a computer for generating explanatory material of a causal relationship expressed in a causal graph. The causal graph is information representing a causal relationship between elements in a graph form. The causal relationship is a relationship between a cause and an effect caused by the cause.

The causal graph includes nodes representing elements and edges representing causal relationships between the elements. Each element corresponds to, for example, an event. The edge has directivity and is represented by an arrow (single or double arrow). In a causal graph, an element based on which a certain result is established is called a "factor".

The explanatory material is information describing a causal relationship expressed in the causal graph. The explanatory material may be, for example, material that explains the causal relationship by text. Further, the explanatory material may explain the causal relationship by audio. Further, the explanatory material may explain the causal relationship by audio and moving images.

Here, in order to support decision making of a user in supply chain management or the like, it is conceivable to generate explanatory material of a causal graph using a generative AI. On the other hand, when the causal graph is complicated and large-scale, the amount of generated sentences becomes enormous, which may be difficult for the user to understand.

As a related art, there is a technique in which, when a causal relationship represented by a causal graph is visualized, a portion to be emphasized (for example, an important causal relationship) is manually designated in advance and thus, a font or a color of characters corresponding to the designated portion is changed, or an order when a sentence is formed is changed. It is conceivable to support the understanding of a user by emphasizing a portion corresponding to an important causal relationship or the like, by using such a conventional technique.

However, in a causal graph represented by a causal graph, the content of interest or the content relevant to a user often differs depending on the user. For this reason, in the conventional techniques, it is difficult to generate explanatory material in which the content of interest or the content relevant to a user is emphasized.

In addition, when the explanatory material of the causal graph is generated, it takes time and effort for the user himself/herself to designate a portion of interest or a relevant portion each time. In addition, when the causal graph is complicated and large-scale, it is difficult to manually designate portions of interest and relevant portions.

Thus, in the present embodiment, an explanatory material generating method for generating explanatory material relevant to a user will be described. Here, an example of processes (corresponding to the following processes (1) to (3)) of the information processing device 101 will be described.

(1) The information processing device 101 receives personal information indicating an attribute of a user. The attribute of the user may be represented by, for example, the position or department of the user. The attribute of the user may be represented by a personality characteristic or a field in which the user is interested.

In the example depicted in Fig. 1, it is assumed that personal information 130 indicating the attribute of a user 102 is received.

(2) The information processing device 101 specifies a weight corresponding to the attribute indicated by the received personal information 130 for each factor included in a first causal graph 120. Here, the first causal graph 120 is a causal graph to be processed. The first causal graph 120 represents, for example, causal relationships between events that may occur in a supply chain network.

The first causal graph 120 includes nodes 121 to 125 and edges 126 to 129. Each of the nodes 121 to 125 represents an event. Each of the edges 126 to 129 represents a causal relationship between events. For example, the edge 129 represents a causal relationship in which an event (element) represented by the node 125 occurs due to an event (element) represented by the node 124.

A factor is an element on which a certain result is established in the first causal graph 120. However, an element serving as a causal origin may be excluded from factors. The weight is a weight indicating a degree of importance, a degree of influence, or the like when the explanatory material is generated. The stronger is the relevance to the attribute represented by the personal information 130, the higher is the specified weight.

Here, the factors included in the first causal graph 120 are nodes 122 and 124. The node 122 is a factor that causes the event (result) represented by the node 123 to occur. The node 124 is a factor that causes the event (result) represented by the node 125 to occur. The node 122 may be referred to as a "factor 122", and the node 124 may be referred to as a "factor 124".

Specifically, for example, the information processing device 101 specifies, for each of the factors 122 and 124 included in the first causal graph 120, a weight that is higher, the stronger is the relevance to the attribute represented by the personal information 130. The weight is represented by, for example, a value of 0.0 or more but not more than 1.0.

In the example depicted in Fig. 1, it is assumed that a weight "0.1" is specified for the factor 122 included in the first causal graph 120, and a weight "1.0" is specified for the factor 124.

(3) The information processing device 101 uses the machine learning model 110 to generate explanatory material 140 of the causal relationship expressed in the first causal graph 120, based on the first causal graph 120 and the specified weights of the factors 122 and 124. Here, the machine learning model 110 is a trained model (generative AI model) capable of generating information describing a causal relationship expressed in an input causal graph.

At the machine learning model 110, the explanatory material 140 is generated having contents in which a factor having a high weight among the factors included in the causal graph (for example, the first causal graph 120) is emphasized. The explanatory material 140 is, for example, a video for explaining the causal relationship by audio and a moving image.

In the example depicted in Fig. 1, the explanatory material 140 is generated having contents in which the factor 124, which has a high weight among the factors 122 and 124 is included in the first causal graph 120, is emphasized.

As described above, according to the information processing device 101, it is possible to generate the explanatory material 140 relevant to the user 102 by weighting the factors in the first causal graph 120 with consideration of the attribute of the user 102. For example, the information processing device 101 may generate the explanatory material 140 having contents specialized for the factor 124 in which the user 102 is interested, and may make it easier for the user 102 to make a decision.

Next, an example of a system configuration of an information processing system 200 including the information processing device 101 depicted in Fig. 1 will be described. Here, a case in which the information processing device 101 depicted in Fig. 1 is applied to an explanatory material generating device 201 in the information processing system 200 will be described as an example.

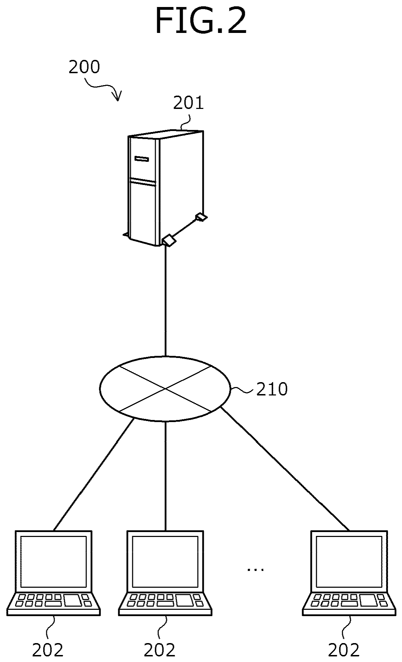

Fig. 2 is an explanatory diagram depicting an example of a system configuration of the information processing system 200. In Fig. 2, the information processing system 200 includes the explanatory material generating device 201 and multiple client devices 202. In the information processing system 200, the explanatory material generating device 201 and the client devices 202 are coupled via a wired or wireless network 210. The network 210 is, for example, the Internet, a local area network (LAN), a wide area network (WAN), or the like.

Here, the explanatory material generating device 201 is a computer for generating an explanatory material of a causal relationship expressed in a causal graph. The causal graph graphically represents, for example, a causal relationship between events that may occur in a supply chain network. The explanatory material generating device 201 is, for example, a server.

Each of the client devices 202 is a computer used by a user of the information processing system 200. The user is, for example, a decision maker in supply chain management. The client devices 202 are, for example, personal computers (PCs), tablet PCs, or the like.

In the information processing system 200, for example, by accessing the explanatory material generating device 201 from one of the client devices 202, the user may refer to the explanatory material generated by the explanatory material generating device 201 to make a decision in supply chain management.

Here, while the explanatory material generating device 201 and the client devices 202 are provided separately, the present disclosure is not limited hereto. For example, the explanatory material generating device 201 may be implemented by the client devices 202.

Next, an example of a hardware configuration of the explanatory material generating device 201 will be described.

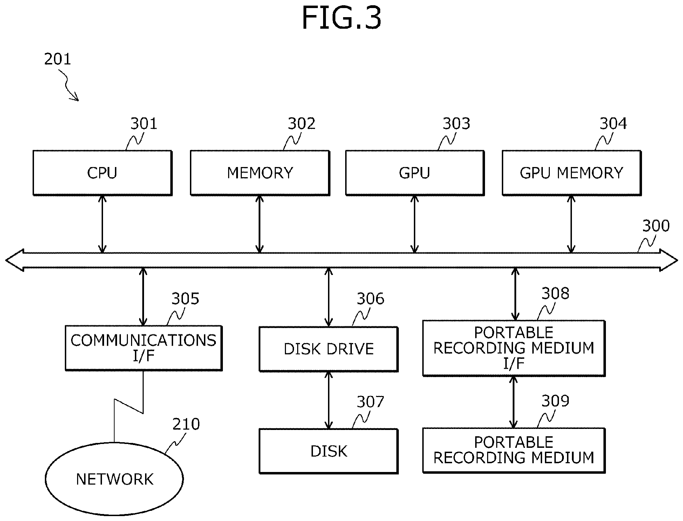

Fig. 3 is a block diagram depicting an example of the hardware configuration of the explanatory material generating device 201. In Fig. 3, the explanatory material generating device 201 includes a central processing unit (CPU) 301, a memory 302, a graphics processing unit (GPU) 303, a GPU memory 304, a communications interface (I/F) 305, a disk drive 306, a disk 307, a portable recording medium I/F 308, and a portable recording medium 309. The components are coupled to each other via a bus 300.

The CPU 301 governs overall control of the explanatory material generating device 201. The GPU 303 performs arithmetic processing such as image processing and natural language processing. The CPU 301 and the GPU 303 may include multiple cores. The memory 302 includes, for example, a read only memory (ROM) and a random access memory (RAM). A program stored in the memory 302 is loaded onto the CPU 301, whereby the CPU 301 executes an encoded process. The GPU memory 304 is a dedicated memory for the GPU 303. The GPU memory 304 is, for example, a Video RAM (VRAM).

The communications I/F 305 is coupled to the network 210 via a communications line, and is coupled to an external computer (for example, the client devices 202 depicted in Fig. 2) via the network 210. The communications I/F 305 serves as an interface between the network 210 and the device, and controls the input and output of data with respect to an

external computer. The communications I/F 305 is, for example, a modem or a LAN adapter.

The disk drive 306 controls the reading and writing of data with respect to the disk 307, under the control of the CPU 301. The disk 307 stores data written thereto under the control of the disk drive 306. The disk 307 is, for example, a magnetic disk, an optical disk, or the like.

The portable recording medium I/F 308 controls the reading and writing of data with respect to the portable recording medium 309, under the control of the CPU 301. The portable recording medium 309 stores data written thereto under the control of the portable recording medium I/F 308. The portable recording medium 309 is, for example, a compact disc (CD)-ROM, a digital versatile disk (DVD), a universal serial bus (USB) memory, or the like.

The explanatory material generating device 201 may include, for example, an input device, a display, a microphone, a speaker, and the like in addition to the above-described components. The explanatory material generating device 201 may omit, for example, the portable recording medium I/F 308 and the portable recording medium 309 among the above-described components. The client devices 202 depicted in Fig. 2 may also be implemented by a hardware configuration similar to that of the explanatory material generating device 201. However, the client devices 202 includes, for example, an input device, a display, a microphone, a speaker, and the like in addition to the above-described components.

Next, an example of a functional configuration of the explanatory material generating device 201 will be described.

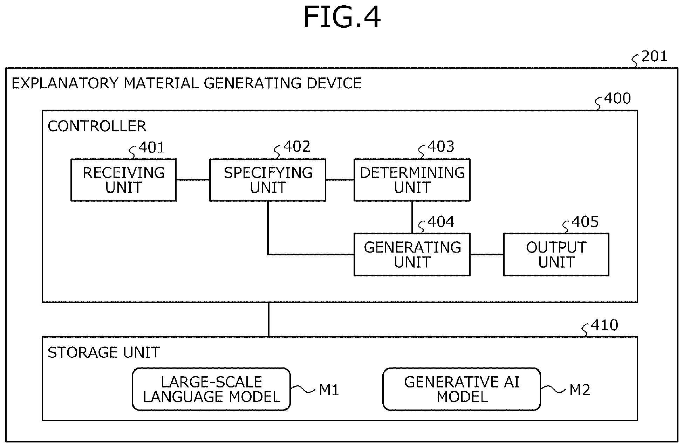

Fig. 4 is a block diagram depicting an example of the functional configuration of the explanatory material generating device 201. In Fig. 4, the explanatory material generating device 201 includes a receiving unit 401, an identifying unit 402, a determining unit 403, a generating unit 404, an output unit 405, and a storage unit 410. The receiving unit 401 to the output unit 405 are functions serving as a controller 400. Specifically, for example, the functions are realized by causing the CPU 301 to execute a program stored in a storage device such as the memory 302, the disk 307, or the portable recording medium 309 depicted in Fig. 3, or by the GPU 303 or the communications I/F 305. Process results of the functional units are stored to, for example, a storage device such as the memory 302 or the disk 307. The storage unit 410 is realized by, for example, a storage device such as the memory 302 or the disk 307. Specifically, for example, the storage unit 410 stores a causal graph of interest to be described later, a rough, large-scale language model M1, a generative AI model M2, and etc.

The receiving unit 401 receives personal information indicating an attribute of the user. Here, the attribute of the user may be represented using any information as long as the information may narrow down what the user is interested in. For example, the attribute of the user may be represented by a position, a department, and a personality characteristic of the user. The attribute of the user may be represented by a field, an event, or the like in which the user is interested. The attribute of the user may be represented by a combination of multiple pieces of information (for example, a position and a department to which the user belongs).

As one example, the personal information may represent the user's position of "making the profit of the company first". Further, the personal information may represent the department to which the user belongs, which is "logistics department". Further, the personal information may represent a personality characteristic "high integrity" of the user.

Specifically, for example, the receiving unit 401 may receive the personal information of the user by receiving the personal information from the client devices 202 depicted in Fig. 2. In addition, the receiving unit 401 may receive the personal information of the user by an operation input of the user using an input device (not depicted) of the device of the user.

The personal information may be managed in a personal information database (DB) (not depicted). In the personal information DB, for example, personal information is managed in association with a user ID. In this case, the receiving unit 401 may receive the user ID from the client devices 202. Then, the receiving unit 401 may receive the obtained personal information by obtaining the personal information corresponding to the received user ID from the personal information DB.

The specifying unit 402 specifies a weight corresponding to the attribute indicated by the received personal information for each factor included in the causal graph of interest. Here, the causal graph of interest is a causal graph to be processed. The causal graph of interest corresponds to, for example, the first causal graph 120 depicted in Fig. 1.

The causal graph of interest includes nodes representing elements and edges representing causal relationships between the elements. An element may be, for example, an event that may occur in a supply chain network. Edges are represented by arrows (single or double arrows) pointing from the causing element to the resulting element. The strength of the causal relationship is represented by, for example, the size of the arrowhead of the arrow or the thickness of the shaft (line).

A factor is an event (element) on which a certain result is established in the causal graph of interest. However, an event (element) serving as a causal origin may be excluded from the factors. The event (element) serving as a starting point may be, for example, a main event of the causal graph of interest or an event designated by the user.

For example, the receiving unit 401 may receive designation of an element serving as a starting point in the causal graph of interest. As the element serving as the starting point, for example, an element representing an event (for example,

a problem, an accident, a risk, a change in social conditions, or the like) that has actually occurred in the supply chain is designated. Specifically, for example, the receiving unit 401 may receive designation of an element serving as a starting point from the client devices 202. The receiving unit 401 may receive designation of an element serving as a starting point by an operation input of a user using the input device (not depicted) of the device of the user.

The weight is a weight indicating a degree of importance, a degree of influence, or the like when the explanatory material is generated. The causal graph of interest is created in advance and stored to the storage unit 410, for example. The causal graph of interest may be obtained from the client devices 202 or another computer.

Specifically, for example, first, the specifying unit 402 uses a large language model (LLM) M1 and one of multiple labels is assigned to each factor in the causal graph of interest. The multiple labels are for explaining factors and are set in advance.

Each label is expressed by, for example, a keyword, a phrase, a sentence, or the like. The labels may represent a basic idea (theme) of a behavior. The labels may represent a subject, a topic, or the like. The labels may represent a department in an osrganization.

The large-scale language model M1 is, for example, a language model constructed by performing training by deep learning with a large amount of text data. The large-scale language model M1 is, for example, a trained model trained to output the degree of association between input information and each of the multiple labels.

The large-scale language model M1 is stored in, for example, the storage unit 410. However, the large-scale language model M1 may be stored in another computer (for example, a server that provides a service capable of using the large-scale language model M1) different from the explanatory material generating device 201. In this case, the explanatory material generating device 201 may use the large-scale language model M1 by accessing the other computer.

More specifically, for example, the specifying unit 402 specifies the degree of association with each of the multiple labels by inputting an event serving as a factor in the causal graph of interest to the large-scale language model M1. Then, the specifying unit 402 assigns to the factor, a label having the largest specified degree of association among the multiple labels.

Next, the specifying unit 402 specifies among the multiple labels, a label corresponding to the attribute indicated by the received personal information. More specifically, for example, the specifying unit 402 specifies the degree of association with each of the multiple labels by inputting to the large-scale language model M1, the attribute represented by the personal information.

Then, the specifying unit 402 specifies among the multiple labels, a label for which the specified degree of association is equal to or greater than a threshold $\alpha$, as a label corresponding to the attribute indicated by the personal information. The threshold value $\alpha$ may be arbitrarily set. The specifying unit 402 may specify a label having the highest specified degree of association among the multiple labels as the label corresponding to the attribute indicated by the personal information.

Then, the specifying unit 402 specifies a weight such that a factor to which the specified label is assigned among the factors included in the causal graph of interest is higher than factors to which other labels are assigned. Thus, the specifying unit 402 may give a higher weight to a factor to which a label having a high degree of association with the attribute of the user is assigned.

Further, the specifying unit 402 may specify a weight for each factor included in the causal graph of interest such that the weight increases with an increasing number of causal relationships with the factor to which the specified label is assigned. As a result, the specifying unit 402 may assign a weight according to the degree of relationship with a factor to which a label having a high degree of association with the attribute of the user is assigned.

Further, the specifying unit 402 may specify a weight for each factor included in the causal graph of interest so that the weight increases as the causal relationship becomes stronger with another factor. As described, the identifying unit 402 may assign a weight according to the strength of the relationship with another factor.

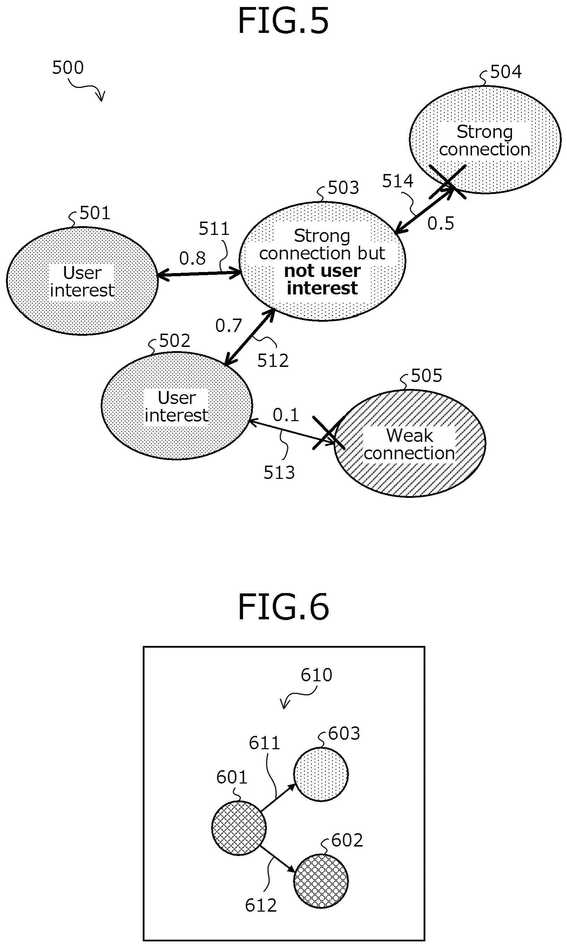

An example of specifying the weight will be described later with reference to Fig. 5.

The determining unit 403 extracts a factor group from the causal graph of interest, based on the specified weight of each factor. Specifically, for example, the determining unit 403 may extract among the factors in the causal graph of interest, a factor group in which the specified weight is equal to or greater than a threshold $\beta$. The threshold $\beta$ may be arbitrarily set. Further, the determining unit 403 may extract a top $\gamma$ (number of) factor groups in descending order of the specified weights among the factors in the causal graph of interest. $\gamma$ may be arbitrarily set.

Further, the determining unit 403 determines the order of the factors included in the extracted factor group based on the causal relationship between the factors included in the factor group. Here, the order of the factors is information for determining a flow when explaining the causal relationship expressed in the causal graph of interest.

Specifically, for example, the determining unit 403 determines the order of the factors included in the extracted factor group according to the causal relationship (cause $\rightarrow$ effect) between the factors included in the factor group. At this time, the determining unit 403 may determine the order of the factors included in the factor group according to, for example, the following determination rules 1 to 4.

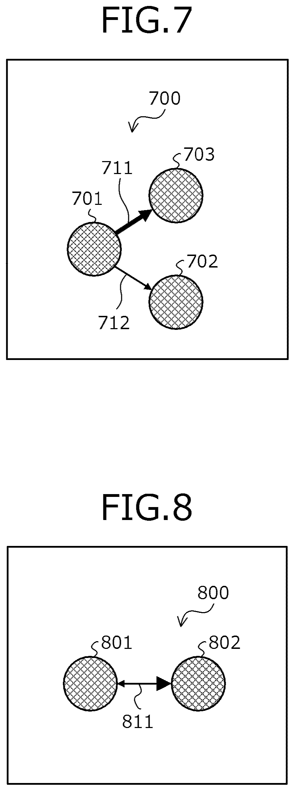

· Determination Rules 1 and 2: For example, for any factor (cause) included in a factor group in a causal graph of

interest, there may be a causal relationship (branch) to multiple different factors (events resulting from the any factor) included in the factor group (for example, refer to Figs. 6 and 7 described later).

In this case, the determining unit 403 may determine the order of the factors by giving priority to a causal relationship with a factor having a high specified weight among the different factors (determination rule 1). Further, the determining unit 403 may determine the order of the factors by giving priority to a factor having the strongest causal relationship among the different factors (determination rule 2).

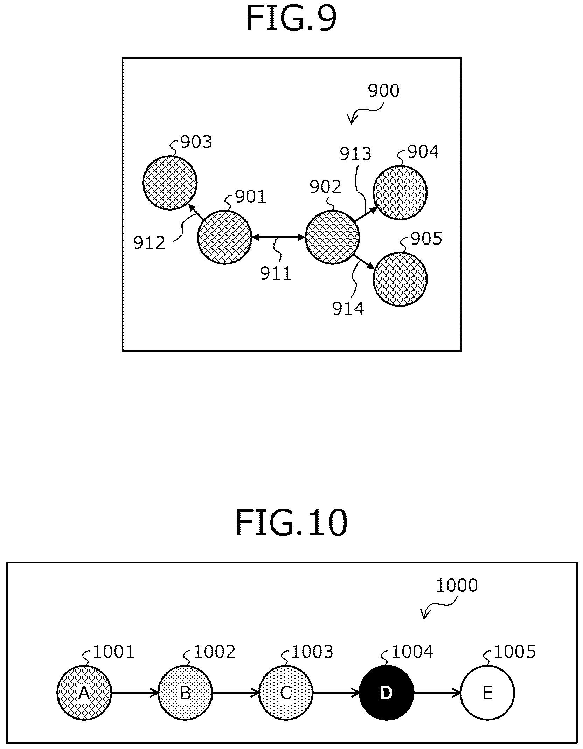

· Determination Rules 3 and 4: For example, there may be a case where an arrow representing a causal relationship between causes and effects included in a factor group in a causal graph of interest is a double-headed arrow (for example, refer to Figs. 8 and 9 to be described later).

In this case, the determining unit 403 may determine the order of the factors by giving priority to the stronger causal relationship among the causal relationships represented by a double-headed arrow (determination rule 3). Further, the strength of the causal relationships represented by a double-headed arrow may be the same. In this case, among the factors coupled by the double-headed arrow, the determining unit 403 may determine the order of the factors by giving priority to a direction toward a factor having a large number of causal relationships with a factor to which a specified label (a label corresponding to an attribute represented by personal information) is assigned (determination rule 4).

More specifically, for example, the determining unit 403 searches for a path from an event (element) serving as a starting point to a prediction result through the factors included in the factor group in the causal graph of interest, based on causal relationships between the factors included in the extracted factor group. The prediction result is, for example, an event (element) serving as an end point. At this time, the determining unit 403 searches for a path according to, for example, the determination rules 1 to 4 as described above. Then, the determining unit 403 may determine the order of the factors on the path in the order of appearance on the obtained path.

There may be a case where a path leading to a prediction result cannot be formed only by the extracted factor group. In this case, the determining unit 403 may search for a path that passes through not only the factors included in the factor group but also non-extracted factors and leads to a prediction result. Further, when searching for a path passing through non-extracted factors, the determining unit 403 may provide an upper limit number (for example, 1) of the non-extracted factors that are allowed to be passed through before reaching a prediction result.

A specific example of a path passing through a non-extracted factor will be described later with reference to Fig. 10.

The generating unit 404 generates explanatory material of a causal relationship expressed in the causal graph of interest, based on the causal graph of interest and the specified weight of each factor, using the generative AI model M2. Here, the generative AI model M2 is a trained model capable of generating information describing a causal relationship expressed in an input causal graph.

For example, the generative AI model M2 is trained to be able to generate from an input causal graph, information for explaining by video (audio and moving image), a causal relationship expressed in the input causal graph. The machine learning model 110 depicted in Fig. 1 corresponds to, for example, the generative AI model M2.

The generative AI model M2 is stored in, for example, the storage unit 410. However, the generative AI model M2 may be stored in another computer (for example, a server that provides a service capable of using the generative AI model M2) different from the explanatory material generating device 201. In this case, the explanatory material generating device 201 may use the generative AI model M2 by accessing the other computer.

Specifically, for example, the generating unit 404 generates a prompt (statement) for giving an instruction to generate with emphasis on a factor having a high weight among the factors in the causal graph of interest, a video explaining the causal relationship expressed in the causal graph of interest. Then, the generating unit 404 may generate the explanatory material (video) by giving the generated prompt to the generative AI model M2.

In addition, the generating unit 404 may generate explanatory material for the causal relationship expressed in the causal graph of interest, based on the causal graph of interest, the weight of each factor included in the extracted factor group, and the determined order of the factors, using the generative AI model M2.

Specifically, for example, the generating unit 404 generates a prompt (statement) for giving an instruction to generate a video explaining the causal relationship between the factors included in the factor group, according to the determined order of the factors, with emphasis on a factor having a high weight in the factor group. Then, the generating unit 404 may generate the explanatory material (video) by giving the generated prompt to the generative AI model M2.

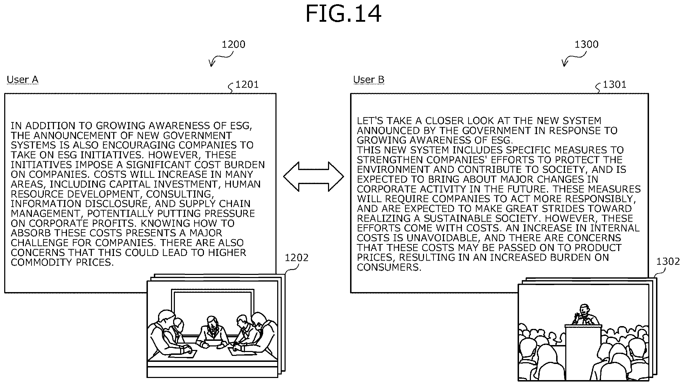

A specific example of the explanatory material will be described later with reference to Fig. 14.

The output unit 405 outputs the generated explanatory material. The output unit 405 may output the generated explanatory material in association with the causal graph of interest. Examples of the output format of the output unit 405 include storage to a storage device such as the memory 302 or the disk 307, transmission to another computer by the communications I/F 305, video output to a display (not depicted), and audio output to a microphone.

Specifically, for example, the output unit 405 may transmit the generated explanatory material (video) to the client devices 202. As a result, the user may view on the client devices 202, the explanatory material generated by the explanatory material generating device 201.

The functional units (the receiving unit 401 to the output unit 405) of the explanatory material generating device 201 may be implemented by multiple computers (for example, the explanatory material generating device 201 and the client devices 202) in the information processing system 200. In this case, exchange between the functional units of the different computers is performed by, for example, transmission and reception between the functional units via the network 210.

Next, an example of specifying the weight of each factor included in a causal graph of interest will be described.

Fig. 5 is an explanatory diagram depicting an example of specifying a weight. In Fig. 5, a causal graph 500 is an example of a causal graph of interest. However, in Fig. 5, a part of the causal graph 500 is extracted and displayed. The causal graph 500 includes nodes 501 to 505 and edges 511 to 514. Each of the nodes 501 to 505 represents a factor event. Each of the edges 511 to 514 represents a causal relationship between events. The numerical value attached to each of the edges 511 to 514 indicates the strength of the causal relationship. Here, the strength of the causal relationship is represented by a value greater than 0 but not more than 1.

Here, the nodes 501 and 502 represent factors to which labels corresponding to attributes represented by personal information are assigned ("User interest" in Fig. 5). The node 503 is assigned another label different from the label corresponding to the attribute represented by the personal information, and represents a factor coupled to the nodes 501 and 502 in a strong causal relationship ("Strong connection but not user interest" in Fig. 5).

The node 504 is assigned a label different from the label corresponding to the attribute represented by the personal information, and represents a factor coupled to the node 503 in a strong causal relationship ("Strong connection" in Fig. 5). The node 505 is assigned another label different from the label corresponding to the attribute represented by the personal information, and represents a factor coupled to the nodes 501 and 502 in a weak causal relationship ("Weak connection" in Fig. 5).

Herein, the nodes 501 to 505 may be referred to as "factors 501 to 505".

For each of the factors 501 to 505 included in the causal graph 500, the specifying unit 402 may specify a weight corresponding to an attribute represented by the personal information by using the following formula (1).

$$\text{Causal_Factor_weight}=\text{Normalization}(\text{User_interest} + \text{coefficient}*(\text{connection_number} + \text{causal strength})) \qquad (1)$$

Here, CausalFactor_weight indicates a weight. Normalization () indicates a function for performing a normalization process. User_interest is a variable indicating whether a label corresponding to the attribute indicated by the personal information is assigned. When a label corresponding to an attribute represented by the personal information is assigned, User_interest is "1". On the other hand, when a label corresponding to an attribute represented by the personal information is not assigned, User_interest is "0".

Herein, a factor to which a label corresponding to an attribute represented by personal information is assigned may be referred to as "User interest".

The coefficient indicates a coefficient related to how many factors other than the user interest are included. The coefficient may be a preset constant. Coefficient may be a value determined according to a distance (shortest distance) from the user interest using a Gaussian function or the like. For example, the coefficient is set such that "coefficient * (connection_number + causal strength)" is less than" 1".

The connection_number indicates the number of causal relationships with the User interest. The causal strength indicates the strength of a causal relationship with another factor. When there are causal relationships with multiple factors, the causal strength may indicate, for example, the strength of the strongest causal relationship.

The specifying unit 402 may assign a higher weight to a factor to which a label having a high degree of association with an attribute of the user is assigned, by using the above formula (1). Further, the specifying unit 402 may specify a weight according to the strength of a relationship with a factor to which a label having a high degree of association with the attribute of the user is assigned or the strength of a relationship with another factor.

Here, the weight of the factor 501 is "CausalFactor_weight=Normalization(1 +coefficient* (0+0.8))". The weight of the factor 502 is "CausalFactor_weight=Normalization(1+coefficient* (0+0.7))". The weight of the factor 503 is "CausalFactor_weight=Normalization (0+coefficient*(2+0.8))".

The weight of the factor 504 is "CausalFactor_weight=Normalization(0+coefficient*(0+0.5))". The weight of the factor 505 is "CausalFactor_weight=Normalization(0+coefficient*(1+0.1))".

For example, it is assumed that, among the weights of the identified factors 501 to 505, the weights of the factors 501 to 503 are equal to or greater than the threshold $\beta$, and the weights of the factors 504 and 505 are less than the threshold $\beta$. In this case, for example, the determining unit 403 extracts the factors 501 to 503 as a factor group among the factors 501 to 505, and does not extract the factors 504 and 505.

Next, a determination rule used when determining the order of each factor included in the factor group extracted from the causal graph of interest will be described with reference to Figs. 6 to 9. First, a determination rule when there is a branch will be described with reference to Figs. 6 and 7.

Fig. 6 is an explanatory diagram (part 1) depicting an example of a determination rule. In Fig. 6, a subgraph 610 is a partial graph including the extracted causal group in the causal graph of interest. The subgraph 610 includes nodes 601 to 603 and edges 611 and 612. Each of the nodes 601 to 603 represents a factor event. Each of the edges 611 and 612 represents a causal relationship between events.

The background color of each of the nodes 601 to 603 is darker the higher is the specified weight. Here, the background colors of the nodes 601 and 602 are darker than the background color of the node 603. The thickness of each of the edges 611 and 612 is greater the stronger is the causal relationship. Here, the thicknesses of the edges 611 and 612 are the same.

Here, the node 601 has a causal relationship with the node 602 and a causal relationship with the node 603, and the flow of the causal relationship branches. In this case, for example, for the factor represented by the node 601, the determining unit 403 determines the order of the factors by giving priority to the causal relationship with the factor (node 602) having a higher weight among the factors represented by the nodes 602 and 603 (determination rule 1).

Specifically, for example, when searching for a path passing through the node 601, the determining unit 403 searches for a first path passing through the node 602 and reaching the prediction result. The determining unit 403 searches for a second path that passes through the node 603 and reaches the prediction result. Then, the determining unit 403 may assign a sequence to the factors appearing on the first path and then assign a sequence to the factors appearing on the second path.

However, configuration may be such that the determining unit 403 searches only for the first path passing through the node 602 and does not search for the second path passing through the node 603. Specifically, for example, the determining unit 403 may exclude, from the factor group, the factor represented by the node 603 and the factors coupled to the node 603.

Accordingly, when determining the order (sequence) of the factors included in the factor group, the determining unit 403 may determine the order of the factors by giving priority to a causal relationship to a factor having a high weight in a case where there is a portion where a flow of a causal relationship branches.

Fig. 7 is an explanatory diagram (part 2) depicting an example of a determination rule. In Fig. 7, a subgraph 700 is a partial graph including the extracted causal group in the causal graph of interest. The subgraph 700 includes nodes 701 to 703 and edges 711 and 712. Each of the nodes 701 to 703 represents a factor event. Each of the edges 711 and 712 represents a causal relationship between events.

The background color of each of the nodes 701 to 703 is denser (darker) the higher is the specified weight. Here, the background colors of the nodes 701 to 703 have the same density. Further, the thickness of each of the edges 711 and 712 is thicker the stronger is the causal relationship. Here, the edge 711 is thicker than the edge 712.

Here, the node 701 has a causal relationship with the node 702 and a causal relationship with the node 703, and the flow of the causal relationship branches. The background colors of the nodes 702 and 703 are the same (the weights specified respectively for the factors represented by the nodes 702 and 703 are the same).

In this case, for example, with respect to the factor represented by the node 701, the determining unit 403 determines the order of the factors by giving priority to the factor (node 703) having the strongest causal relationship among the factors represented by the nodes 702 and 703 (determination rule 2).

Specifically, for example, when searching for a path passing through the node 701, the determining unit 403 searches for a first path that passes through the node 702 and reaches the prediction result. In addition, the determining unit 403 searches for a second path that passes through the node 703 and reaches the prediction result. Then, the determining unit 403 may give the order of the factors appearing on the first path after giving the order of the factors appearing on the second path.

However, configuration may be such that the determining unit 403 searches for only a second path that passes through the node 703 and may not omit searching for a first path passing through the node 702. Specifically, for example, the determining unit 403 may exclude, from the factor group, the factor represented by the node 702 and the factors coupled to the node 702.

Thus, when determining the order of the factors included in the factor group, the determining unit 403 may determine the order of the factors by giving priority to the strongest causal relationship in a case where there is a portion where the flow of the causal relationship branches.

Next, with reference to Figs. 8 and 9, a determination rule in a case where an arrow representing a causal relationship is a double-headed arrow will be described.

Fig. 8 is an explanatory diagram (part 3) depicting an example of a determination rule. In Fig. 8, a subgraph 800 is a partial graph including an extracted causal group in the causal graph of interest. The subgraph 800 includes nodes 801 and 802 and an edge 811. Each of the nodes 801 and 802 represents a factor event. The edge 811 represents a causal relationship between the events.

Here, the edge 811 is a double-headed arrow. When the edge 811 is a double-headed arrow, the strength of the causal relationship is represented by the size of the arrowheads of the arrow. Here, the arrow head from the node 801 to the node 802 is larger. Therefore, the causal relationship from the node 801 to the node 802 is stronger than the causal

relationship from the node 802 to the node 801.

In this case, for example, the determining unit 403 determines the order of the factors by giving priority to the stronger causal relationship (from the node 801 to the node 802) among the causal relationships represented by the edge 811 (double-headed arrow) (determination rule 3).

Specifically, for example, when the node 801 is reached during the search for a path leading to the prediction result, the determining unit 403 searches for a path that passes through the node 802. When the node 802 is reached during the search for the path leading to the prediction result, the determining unit 403 does not transition to the node 801 and searches for a path that passes through another node (not depicted) coupled to the node 802. When there is no other node, the determining unit 403 may use the event represented by the node 802 as the prediction result.

Fig. 9 is an explanatory diagram (part 4) depicting an example of a determination rule. In Fig. 9, a subgraph 900 is a partial graph including the extracted causal group in the causal graph of interest. The subgraph 900 includes nodes 901 to 905 and edges 911 to 914. Each of the nodes 901 to 905 represents a factor event. Each of the edges 911 to 914 represents a causal relationship between events.

Here, the edge 911 is a double-headed arrow. The sizes of the left and right arrowheads of the edge 911 are the same. Therefore, the causal relationship from the node 901 to the node 902 and the causal relationship from the node 902 to the node 901 have the same strength.

In this case, for example, the determining unit 403 determines the order of the factors by giving priority to the direction to a factor having a large number of causal relationships with the User interest among the factors represented by the nodes 901 and 902 coupled to the edge 911 (double-headed arrow) (determination rule 4).

Here, the nodes 901 to 905 all represent factors of User interest. In this case, the number of User interests coupled to the node 901 is "2". The number of User interests coupled to the node 902 is "3". Therefore, for example, the determining unit 403 determines the order of the factors by giving priority to the direction from the factor represented by the node 901 to the factor represented by the node 902 among the factors represented by the nodes 901 and 902 coupled to the edge 911 (double-headed arrow).

Specifically, for example, when the node 901 is reached during the search for a path leading to the prediction result, the determining unit 403 searches for a path that passes through the node 902. When the node 902 is reached during the search for a path leading to the prediction result, the determining unit 403 does not transition to the node 901 and instead searches for a path that passes through another node (not depicted) coupled to the node 902.

The number of User interests coupled to the node 901 may be the same as the number of User interests coupled to the node 902. In this case, for the node 901, the determining unit 403 calculates the total weight by adding the weight of the factor represented by the node 901 and the weight of the User interest (excluding the node 902) coupled to the node 901. For the node 902, the determining unit 403 calculates the total weight by adding the weight of the factor represented by the node 902 and the weight of the User interest (excluding the node 901) coupled to the node 902. Then, the determining unit 403 may determine the order of the factors by giving priority to the direction in which the calculated total weight is higher.

Next, a path passing through non-extracted factors not included in the extracted factor group will be described.

Fig. 10 is an explanatory diagram depicting a specific example of a path passing through a non-extracted factor. In Fig. 10, a path 1000 indicates a path that passes through nodes 1001 to 1004 to a node 1005 (prediction result). Here, nodes 1001 to 1003 represent factors A, B, and C included in the factor group. The node 1004 represents a non-extracted factor D. A node 1005 represents a target E as a prediction result.

Here, the node 1005 (prediction result) is not reached unless the node 1004 is passed after the node 1003. Therefore, the determining unit 403 searches for a path 1000 that passes through the node 1004 representing the non-extracted factor D after the node 1003 and reaches the node 1005 representing the target E (prediction result).

Then, the determining unit 403 determines the order of the factors A, B, C, and D represented by the nodes 1001 to 1004 on the path 1000 in the order of appearance on the path 1000. In this case, for example, the generating unit 404 generates the explanatory material based on the causal graph of interest, the weight of each factor (for example, the factors A, B, and C) included in the extracted factor group, and the determined order of the factors (for example, the factors A, B, C, and D) using the generative AI model M2.

However, the explanatory material includes an explanation of the causal relationship based on the non-extracted factor D. Therefore, the explanatory material generating device 201 generates an explanatory material such as "From the viewpoint of the field in which the user is interested, there is a possibility that the causal relationship to the target E is weak. At this time, the explanatory material generating device 201 may also output information indicating the causal relationship between the non-extracted factor D and the target E.

Next, an example of specifying a label corresponding to an attribute of a user will be described. Here, it is assumed that labels L1 to L5 are set as multiple labels. The label L1 indicates "Legal/ethical". The label L2 indicates "Governance/political". The label L3 indicates "Profitability/economy". The label L4 indicates "Environmental". The label L5 indicates "Social/humanity".

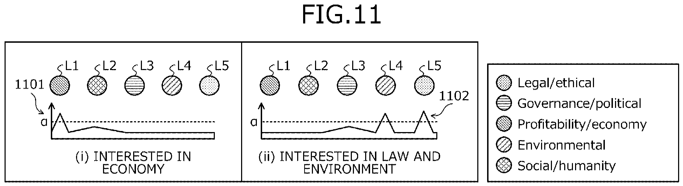

Fig. 11 is an explanatory diagram depicting an example of specifying a label. In (i) depicted in Fig. 11, it is assumed

that the attribute of the user represented by the personal information is "interested in economy". In this case, the specifying unit 402 specifies the degree of association with each of the labels L1 to L5 by inputting the attribute "interested in economy" of the user represented by the personal information to the large-scale language model M1.

The graph 1101 indicates the degree of association between the user attribute "interested in economy" and each of the labels L1 to L5. Then, the specifying unit 402 specifies a label of which the specified degree of association is equal to or greater than the threshold value $\alpha$ among the labels L1 to L5 as a label corresponding to the attribute "interested in economy" of the user.

In the graph 1101, the degree of association with the label L1 is equal to or greater than the threshold $\alpha$. Therefore, the specifying unit 402 specifies the label L1 as the label corresponding to the attribute "interested in economy" of the user.

In (ii) depicted in Fig. 11, it is assumed that the attribute of the user represented by the personal information is "interested in law and environment". In this case, the specifying unit 402 specifies the degree of association with each of the labels L1 to L5 by inputting the attribute "interested in law and environment" of the user represented by the personal information to the large-scale language model M1.

The graph 1102 indicates the degree of association between the user attribute "interested in law and environment" and each of the labels L1 to L5. Then, the specifying unit 402 specifies a label whose specified degree of association is equal to or greater than the threshold value $\alpha$ among the labels L1 to L5 as a label corresponding to the attribute "interested in law and environment" of the user.

In the graph 1102, the degree of association with the labels L4 and L5 is equal to or greater than the threshold $\alpha$. Therefore, the specifying unit 402 specifies the labels L4 and L5 as labels corresponding to the user attribute "interested in law and environment".

Next, an operation example of the explanatory material generating device 201 will be described.

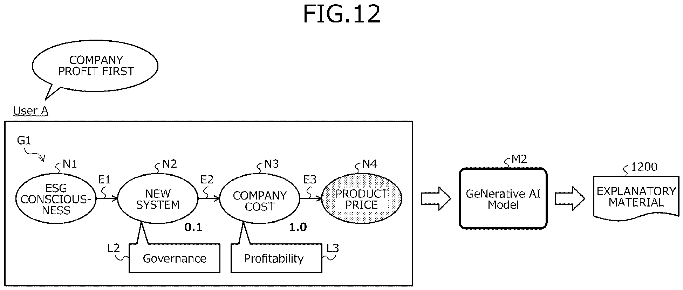

Fig. 12 is an explanatory diagram depicting a first operation example of the explanatory material generating device 201. In Fig. 12, a causal graph G1 is an example of a causal graph of interest. The causal graph G1 includes nodes N1 to N4 and edges E1 to E3. The node N1 represents an event "ESG consciousness" serving as a starting point. The nodes N2 and N3 represent events "new system" and "company cost" as factors. The node N4 represents an event "product price" as a prediction result. Each of the edges E1 to E3 represents a causal relationship between events.

In the causal graph G1, each event is depicted in a simplified manner. For example, the event "ESG consciousness" indicates "increase in ESG consciousness". The event "new system" indicates "new system announcement". The event "enterprise cost" indicates "enterprise cost increase". The event "commodity price" indicates "commodity price increase".

Here, it is assumed that the user is "user A" and the attribute of the user A represented by the personal information is "company profit first". The nodes N2 and N3 may be referred to as "factors N2 and N3".

In this case, the explanatory material generating device 201 assigns one of the labels L1 to L5 to each of the factors N2 and N3 in the causal graph G1 using the large-scale language model M1 (see Fig. 4). Here, it is assumed that a label L2 ("Governance" in Fig. 11) is assigned to the factor N2, and a label L3 ("Profitability" in Fig. 11) is assigned to the factor N3.

Next, the explanatory material generating device 201 uses the large-scale language model M1 (see Fig. 4) to specify a label corresponding to the attribute "company profit first" of the user A. Here, it is assumed that the label L3 corresponding to the attribute "company profit first" of the user A is specified.

Then, the explanatory material generating device 201 specifies a weight such that the factor N3 to which the specified label L3 is assigned among the factors N2 and N3 included in the causal graph G1 is higher than the factor N2 to which the other label L2 is assigned. The weight is represented by a value of 0.0 or more but not more than 1.0. Here, it is assumed that the weight "0.1" is specified for the factor N2 and the weight "1.0" is specified for the factor N3.

The explanatory material generating device 201 extracts a factor group from the causal graph G1 based on the specified weights of the factors N2 and N3, and determines the order of the factors included in the factor group based on the causal relationship between the factors included in the extracted factor group. Here, it is assumed that the factors N2 and N3 are extracted as the factor group, and the order "1" of the factor N2 and the order "2" of the factor N3 are determined.

In this case, the explanatory material generating device 201 generates explanatory material 1200 of the causal relationship expressed in the causal graph G1 based on the causal graph G1, the weights of the factors N2 and N3, and the determined order of the factors N2 and N3, using the generative AI model M2. The explanatory material 1200 has contents specialized for the factor N3 that is likely to be focused on by the user A.

The explanatory material 1200 will be described later with reference to Fig. 14.

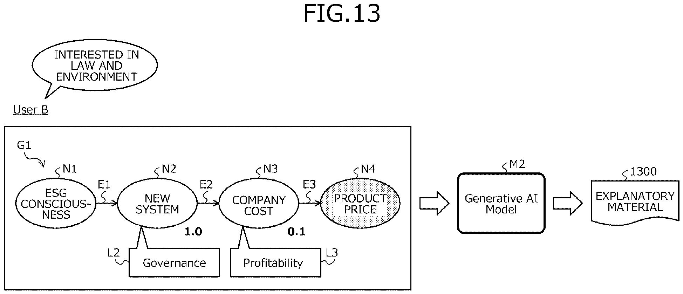

Fig. 13 is an explanatory diagram depicting a second operation example of the explanatory material generating device 201. In Fig. 13, a causal graph G1 is depicted. Here, it is assumed that the user is "user B" and the attribute of the user B represented by the personal information is "interested in law and environment".

The explanatory material generating device 201 assigns one of the labels L1 to L5 to each of the factors N2 and N3 in the causal graph G1, using the large-scale language model M1 (see Fig. 4). Here, it is assumed that a label L2 ("Governance" in Fig. 12) is assigned to the factor N2, and a label L3 ("Profitability" in Fig. 12) is assigned to the factor N3.

Next, the explanatory material generating device 201 specifies a label corresponding to the attribute "interested in law and environment" of the user B using the large-scale language model M1 (see Fig. 4). Here, it is assumed that the label L2 corresponding to the attribute "interested in law and environment" of the user B is specified.

Then, the explanatory material generating device 201 specifies a weight such that, among the factors N2 and N3 included in the causal graph G1, the factor N2 to which the specified label L2 is assigned is higher than the factor N3 to which the other label L3 is assigned. Here, it is assumed that the weight "1.0" is specified for the factor N2 and the weight "0.1" is specified for the factor N3.

The explanatory material generating device 201 extracts a factor group from the causal graph G1 based on the specified weights of the factors N2 and N3, and determines the order of the factors included in the factor group based on the causal relationship between the factors included in the extracted factor group. Here, it is assumed that the factors N2 and N3 are extracted as the factor group, and the order "1" of the factor N2 and the order "2" of the factor N3 are determined.

In this case, the explanatory material generating device 201 generates explanatory material 1300 of the causal relationship expressed in the causal graph G1 based on the causal graph G1, the weights of the factors N2 and N3, and the determined order of the factors N2 and N3 using the generative AI model M2. The explanatory material 1300 has contents specialized for the factor N2 that is likely to be focused on by the user B.

The explanatory material 1300 will be described later with reference to Fig. 14.

Next, a specific example of the explanatory material will be described.

Fig. 14 is an explanatory diagram depicting a specific example of the explanatory material. In Fig. 14, an explanatory material 1200 and an explanatory material 1300 are depicted.

The explanatory material 1200 is information for explaining the cause- and-effect relationship expressed in the causal graph G1, and includes a script 1201 and a video 1202. The script 1201 indicates a flow of discussion when explaining the causal relationship expressed in the causal graph G1 in the video 1202. The video 1202 depicts a moving image for explaining the causal relationship expressed in the causal graph G1.

The explanatory material 1300 is information for explaining the causal relationship expressed in the causal graph G1, and includes a script 1301 and a video 1302. The script 1301 indicates a flow of discussion when explaining the causal relationship expressed in the causal graph G1 in the video 1302. The video 1302 depicts a moving image for explaining the causal relationship expressed in the causal graph G1.

Here, the explanatory material 1200 has contents in which the factor N3 having a high weight among the factors N2 and N3 included in the causal graph G1 is emphasized. The factor N3 has a weight of "1.0 (maximum value)" and may be said to be a factor of interest to the user A (see Fig. 12). As a result, the explanatory material generating device 201 may visualize the prediction result personalized for the user A and facilitate the decision making of the user A.

On the other hand, the explanatory material 1300 has contents in which the factor N2 having a high weight among the factors N2 and N3 included in the causal graph G1 is emphasized. The factor N2 has a weight of "1.0 (maximum value)" and may be said to be a factor of interest to the user B (see Fig. 13). As a result, the explanatory material generating device 201 may visualize the prediction result personalized for the user B and facilitate the decision making of the user B.

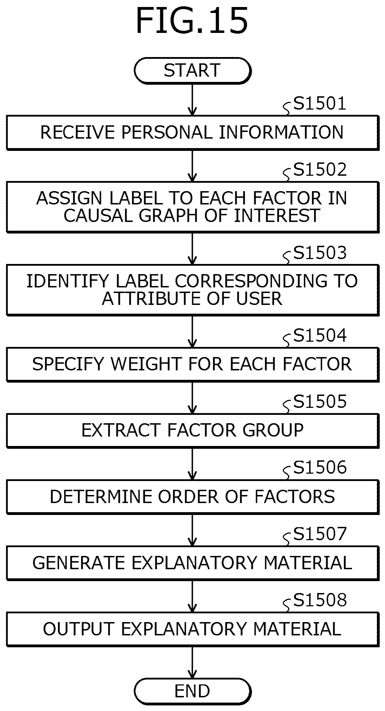

Next, a procedure of an explanatory material generating process of the explanatory material generating device 201 will be described with reference to Fig. 15.

Fig. 15 is a flowchart depicting a procedure of an example of the explanatory material generating process of the explanatory material generating device 201. In the flowchart depicted in Fig. 15, first, the explanatory material generating device 201 receives personal information representing an attribute of a user (step S1501). At this time, the explanatory material generating device 201 may also receive designation of an event (element) serving as a starting point in the causal graph of interest, for example.

Next, the explanatory material generating device 201 assigns one of multiple labels to each factor in a causal graph of interest using the large-scale language model M1 (step S1502). Next, the explanatory material generating device 201 identifies a label corresponding to the attribute of the user represented by the received personal information among the multiple labels (step S1503).

Then, the explanatory material generating device 201 specifies a weight according to the attribute of the user for each factor included in the causal graph of interest (step S1504). Specifically, for example, the explanatory material generating device 201 may specify the weight of each factor using the above formula (1).

Next, the explanatory material generating device 201 extracts a factor group from the causal graph of interest based on the specified weight of each factor (step S1505). Then, the explanatory material generating device 201 determines the order of the factors included in the extracted factor group, based on the causal relationship between the factors included in the factor group (step S1506).

Next, the explanatory material generating device 201 generates explanatory material of the causal relationship expressed in the causal graph of interest based on the causal graph of interest, the weight of each factor included in the extracted factor group, and the determined order of the factors, using the generative AI model M2 (step S1507). Then, the explanatory material generating device 201 outputs the generated explanatory material (step S1508), and ends the series of processes according to the flowchart.

Thus, the explanatory material generating device 201 may generate explanatory material relevant to the user.

As described above, the explanatory material generating device 201 according to the embodiment may receive personal information representing an attribute of a user and specify a weight corresponding to the attribute represented by the received personal information for each factor included in a causal graph of interest. Then, according to the explanatory material generating device 201, it is possible to generate the explanatory material of the causal relationship expressed in the causal graph of interest, based on the causal graph of interest and the specified weight of each factor using the generative AI model M2 and output the generated explanatory material.

Thus, the explanatory material generating device 201 may generate an explanatory material relevant to the user by weighting the factor with consideration of the attribute of the user. For example, the explanatory material generating device 201 may generate an explanatory material having content specialized for a factor in which the user is interested, and may facilitate decision making by the user.

Further, according to the explanatory material generating device 201, any one of multiple labels may be assigned to each factor in the causal graph of interest, and a label corresponding to an attribute represented by personal information may be specified among the labels. Then, according to the explanatory material generating device 201, it is possible to specify the weight such that the factor to which the specified label is assigned among the factors included in the causal graph of interest is higher than the factors to which the other labels are assigned.

Thus, the explanatory material generating device 201 may assign a higher weight to a factor to which a label having a high degree of association with the attribute of the user is assigned.

Further, according to the explanatory material generating device 201, for each factor included in the causal graph of interest, the weight may be specified so as to increase with an increasing number of causal relationships with the factor to which the specified label is assigned.

As a result, the explanatory material generating device 201 may assign a weight according to the number of relationships with a factor to which a label having a high degree of association with the attribute of the user is assigned.

Further, according to the explanatory material generating device 201, it is possible to specify a weight for each factor included in the causal graph of interest such that the weight increases as a causal relationship becomes stronger with another factor.

Thus, the explanatory material generating device 201 may assign a weight according to the strength of the relationship with other factors.

According to the explanatory material generating device 201, a factor group may be extracted from the causal graph of interest based on the specified weight of each factor, and the order of the factors included in the factor group may be determined based on the causal relationship between the factors included in the extracted factor group. Specifically, for example, the explanatory material generating device 201 extracts a factor group in which the specified weight is equal to or greater than a threshold $\beta$ among the factors in the causal graph of interest. Then, according to the explanatory material generating device 201, it is possible to generate an explanatory material based on the causal graph of interest, the weight of each factor included in the extracted factor group, and the determined order of the factors, using the generative AI model M2.

As a result, the explanatory material generating device 201 may narrow down factors of interest to the user and determine a causal flow based on the causal relationship, and may generate an explanatory material that is specialized in the factors of interest to the user and has a more natural flow.

In addition, according to the explanatory material generating device 201, when there is a causal relationship between any factor included in a factor group in a causal graph of interest and multiple different factors included in the factor group, it is possible to determine the order of the factors included in the factor group by giving priority to a causal relationship to a factor having a high specified weight among the plurality of different factors.

As a result, the explanatory material generating device 201 may determine the flow of causality when explaining a causal relationship by giving priority to the direction to a factor of more interest to the user.

In addition, according to the explanatory material generating device 201, when there is a causal relationship with multiple different factors included in a factor group for any factor included in the factor group in the causal graph of interest, the order of the factors included in the factor group may be determined by giving priority to a factor having the strongest causal relationship among the causal relationships with the different factors.

As a result, the explanatory material generating device 201 may determine a flow of causality when explaining a causal relationship by giving priority to a direction toward a factor having a stronger causal relationship.

Further, according to the explanatory material generating device 201, when an arrow representing a causal relationship between causes and effects included in a factor group in a causal graph of interest is a double-headed arrow, the order of the factors included in the factor group may be determined by giving priority to a stronger causal relationship among causal relationships represented by the double-headed arrow.

As a result, the explanatory material generating device 201 may determine a flow of causality when explaining a causal relationship by giving priority to a direction toward a factor having a stronger causal relationship.

Further, according to the explanatory material generating device 201, it is possible to generate explanatory

material including a video for explaining the causal relationship expressed in the causal graph of interest and a script indicating a flow of discussion when explaining the causal relationship expressed in the causal graph of interest in the video.

As a result, the explanatory material generating device 201 may enhance the ease of understanding by the user, for example, as compared with the case where the causal relationship is explained only by sentences.

Thus, according to the explanatory material generating device 201, it is possible to visualize the prediction result personalized for the user, and it is possible to facilitate the user's decision making. For example, the explanatory material generating device 201 may explain a flow of cause and effect serving as a basis for prediction using text, audio, video, etc. on the basis of an event of interest to a decision maker (user) in supply chain management. This makes it easier for the decision maker to determine what kind of action should be taken when some problem occurs in the supply chain.

The explanatory material generating method described in the present embodiment may be implemented by executing a prepared program on a computer such as a personal computer and a workstation. The program is stored on a non-transitory, computer-readable recording medium such as a hard disk, a flexible disk, a compact disc read-only memory (CD-ROM), a digital versatile disc (DVD), a USB memory, etc., read out from the computer-readable medium, and executed by the computer. The program may be distributed through a network such as the Internet.

According to the explanatory material generating device, it is possible to generate explanatory material relevant to a user.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

## Claims

**1.** An explanatory material generating method executed by a computer, the method comprising:

receiving personal information representing an attribute of a user;
specifying for each of a plurality of factors included in a first causal graph, a weight corresponding to the attribute represented by the received personal information; and
generating explanatory material of a causal relationship expressed in the first causal graph, based on the first causal graph and the specified weight of each factor, using a machine learning model configured to generate information for explaining a causal relationship expressed in an input causal graph.

**2.** The method according to claim 1, wherein
the specifying includes:

assigning one of a plurality of labels to each factor in the first causal graph;
identifying a label corresponding to the attribute represented by the personal information, among the plurality of labels; and
specifying the weight so that, of the plurality of factors included in the first causal graph, the weight of a factor assigned with the identified label is higher than weights of others of the plurality of factors assigned with other labels.

**3.** The method according to claim 2, wherein the specifying the weight for the each of the plurality of factors includes specifying the weight so that the weight is higher as a number of causal relationships increases with the factor to which the specified label is assigned.

**4.** The method according to claim 2 or 3, wherein the specifying the weight for the each of the plurality of factors includes specifying so that the weight is higher as a causal relationship becomes stronger with another factor.

**5.** The method according to any one of claims 1 to 4, further comprising:

extracting a factor group from the first causal graph based on the specified weight of each of the plurality of factors; and
determining an order of factors included in the factor group based on a causal relationship between the factors

included in the extracted factor group, wherein
the generating includes generating the explanatory material based on the first causal graph, the weight of each factor included in the factor group, and the determined order of the factors, using the machine learning model.

**6.** The explanatory material generating method according to any one of claims 1 to 5, further comprising outputting the generated explanatory material.

**7.** The explanatory material generating method according to claim 5, wherein the determining, when any factor included in the factor group has a plurality of causal relationships with a plurality of different factors of the factor group, includes determining the order of the factors included in the factor group by giving priority to one of the plurality of causal relationships, the one with a factor having a high specified weight among the plurality of different factors.

**8.** The explanatory material generating method according to claim 5, wherein the determining, when any factor included in the factor group has a plurality of causal relationships with a plurality of different factors of the factor group, includes determining the order of the factors included in the factor group by giving priority to a strongest one of the plurality of causal relationships.

**9.** The explanatory material generating method according to claim 5, wherein the determining, when an arrow representing a causal relationship between factors included in the factor group is a double-headed arrow representing a plurality of causal relationships, includes determining the order of the factors included in the factor group by giving priority to a stronger one of the plurality of causal relationships represented by the double-headed arrow.

**10.** The explanatory material generating method according to any one of claims 1 to 9, wherein the explanatory material includes a video for explaining the causal relationship expressed in the first causal graph, and a script indicating a flow of speech when explaining the causal relationship expressed in the first causal graph in the video.

**11.** An explanatory material generating program for causing a computer to execute a process, the process comprising:

receiving personal information representing an attribute of a user;
specifying for each of a plurality of factors included in a first causal graph, a weight corresponding to the attribute represented by the received personal information; and
generating explanatory material of a causal relationship expressed in the first causal graph, based on the first causal graph and the specified weight of each factor, using a machine learning model configured to generate information for explaining a causal relationship expressed in an input causal graph.

FIG.1

130
PERSONAL INFORMATION
102
INFORMATION PROCESSING DEVICE
101
120
121
122
123
124
125
126
127
128
129
0.1
1.0
110
MACHINE LEARNING MODEL
140
EXPLANATORY MATERIAL

FIG.2

200
201
210
...
202
202
202

FIG.3

201
301
CPU
302
MEMORY
303
GPU
304
GPU MEMORY
300
305
COMMUNICATIONS I/F
306
DISK DRIVE
308
PORTABLE RECORDING MEDIUM I/F
307
DISK
309
PORTABLE RECORDING MEDIUM
210
NETWORK

FIG.4

201
EXPLANATORY MATERIAL GENERATING DEVICE
400
CONTROLLER
401
RECEIVING UNIT
402
SPECIFYING UNIT
403
DETERMINING UNIT
404
GENERATING UNIT
405
OUTPUT UNIT
410
STORAGE UNIT
LARGE-SCALE LANGUAGE MODEL
M1
GENERATIVE AI MODEL
M2

FIG.5

500
504
Strong connection
514
0.5
503
501
511
Strong connection but **not user interest**
0.8
User interest
0.7
502
512
505
User interest
0.1
Weak connection
513

FIG.6

610
611
603
601
602
612

FIG.7

700
703
711
701
702
712

FIG.8

800
801
802
811

# FIG.9

900
903
913
904
902
901
912
911
905
914

# FIG.10

1000
1001
1002
1003
1004
1005
A
B
C
D
E

FIG.11

L1
L2
L3
L4
L5
1101
a
(i) INTERESTED IN ECONOMY
L1
L2
L3
L4
L5
1102
a
(ii) INTERESTED IN LAW AND ENVIRONMENT
Legal/ethical
Governance/political
Profitability/economy
Environmental
Social/humanity

FIG.12

COMPANY PROFIT FIRST
User A
G1
N1
ESG CONSCIOUS-NESS
E1
N2
NEW SYSTEM
E2
N3
COMPANY COST
E3
N4
PRODUCT PRICE
0.1
1.0
L2
Governance
Profitability
L3
M2
GeNerative AI Model
1200
EXPLANATORY MATERIAL

FIG.13

INTERESTED IN LAW AND ENVIRONMENT
User B
G1
N1
ESG CONSCIOUS-NESS
E1
N2
NEW SYSTEM
E2
N3
COMPANY COST
E3
N4
PRODUCT PRICE
1.0
0.1
L2
Governance
Profitability
L3
M2
Generative AI Model
1300
EXPLANATORY MATERIAL

FIG.14

1200
User A
1201
IN ADDITION TO GROWING AWARENESS OF ESG, THE ANNOUNCEMENT OF NEW GOVERNMENT SYSTEMS IS ALSO ENCOURAGING COMPANIES TO TAKE ON ESG INITIATIVES. HOWEVER, THESE INITIATIVES IMPOSE A SIGNIFICANT COST BURDEN ON COMPANIES. COSTS WILL INCREASE IN MANY AREAS, INCLUDING CAPITAL INVESTMENT, HUMAN RESOURCE DEVELOPMENT, CONSULTING, INFORMATION DISCLOSURE, AND SUPPLY CHAIN MANAGEMENT, POTENTIALLY PUTTING PRESSURE ON CORPORATE PROFITS. KNOWING HOW TO ABSORB THESE COSTS PRESENTS A MAJOR CHALLENGE FOR COMPANIES. THERE ARE ALSO CONCERNS THAT THIS COULD LEAD TO HIGHER COMMODITY PRICES.
1202
1300
User B
1301
LET'S TAKE A CLOSER LOOK AT THE NEW SYSTEM ANNOUNCED BY THE GOVERNMENT IN RESPONSE TO GROWING AWARENESS OF ESG.
THIS NEW SYSTEM INCLUDES SPECIFIC MEASURES TO STRENGTHEN COMPANIES' EFFORTS TO PROTECT THE ENVIRONMENT AND CONTRIBUTE TO SOCIETY, AND IS EXPECTED TO BRING ABOUT MAJOR CHANGES IN CORPORATE ACTIVITY IN THE FUTURE. THESE MEASURES WILL REQUIRE COMPANIES TO ACT MORE RESPONSIBLY, AND ARE EXPECTED TO MAKE GREAT STRIDES TOWARD REALIZING A SUSTAINABLE SOCIETY. HOWEVER, THESE EFFORTS COME WITH COSTS. AN INCREASE IN INTERNAL COSTS IS UNAVOIDABLE, AND THERE ARE CONCERNS THAT THESE COSTS MAY BE PASSED ON TO PRODUCT PRICES, RESULTING IN AN INCREASED BURDEN ON CONSUMERS.
1302

FIG.15

START
S1501
RECEIVE PERSONAL INFORMATION
S1502
ASSIGN LABEL TO EACH FACTOR IN CAUSAL GRAPH OF INTEREST
S1503
IDENTIFY LABEL CORRESPONDING TO ATTRIBUTE OF USER
S1504
SPECIFY WEIGHT FOR EACH FACTOR
S1505
EXTRACT FACTOR GROUP
S1506
DETERMINE ORDER OF FACTORS
S1507
GENERATE EXPLANATORY MATERIAL
S1508
OUTPUT EXPLANATORY MATERIAL
END

Europäisches Patentamt
European Patent Office
Office européen des brevets

# EUROPEAN SEARCH REPORT

Application Number
EP 26 16 3266

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUAMING DU ET AL: "Identifying Evidence Subgraphs for Financial Risk Detection via Graph Counterfactual and Factual Reasoning", ARXIV.ORG CORNELL UNIVERSITY LIBRARY, 201 OLIN LIBRARY CORNELL UNIVERSITY ITHACA, NY 14853, 9 March 2025 (2025-03-09), XP091950781, * pages 1,5; figure 1 * ----- | 1-11 | INV. G06F16/34 |

TECHNICAL FIELDS SEARCHED (IPC)

G06F

The present search report has been drawn up for all claims

1

| Place of search | Date of completion of the search | Examiner |
|---|---|---|
| The Hague | 22 May 2026 | Rameseder, Jonathan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2024189722 A